Europäisches Patentamt

European Patent Office

Office européen des brevets

(19)

(11) Veröffentlichungsnummer: **0 133 447**
**A2**

(12) # EUROPÄISCHE PATENTANMELDUNG

(21) Anmeldenummer: **84104031.4**

(22) Anmeldetag: **11.04.84**

(51) Int. Cl.⁴: **G 01 P 3/495**

(30) Priorität: **11.05.83 DE 3317168**

(43) Veröffentlichungstag der Anmeldung:
**27.02.85 Patentblatt 85/9**

(84) Benannte Vertragsstaaten:
**DE FR GB NL SE**

(71) Anmelder: **VDO Adolf Schindling AG**
**Gräfstrasse 103**
**D-6000 Frankfurt/Main(DE)**

(72) Erfinder: **Sudler, Roland**
**Grosse Seestrasse 8**
**D-6000 Frankfurt/Main(DE)**

(72) Erfinder: **Lindig, Christian**
**Rossertstrasse 5a**
**D-6233 Kelkheim/Ts. 4(DE)**

(72) Erfinder: **Gräbner, Matthias**
**Im Mühlengrund 25**
**D-6368 Bad Vilbel 3(DE)**

(74) Vertreter: **Könekamp, Herbert, Dipl.-Ing. et al,**
**Sodener Strasse 9**
**D-6231 Schwalbach(DE)**

(54) **Elektrischer Geschwindigkeits- und Wegstreckenmesser für Fahrzeuge.**

(57) In einem elektrischen Geschwindigkeits- und Wegstreckenmesser für Fahrzeuge sind ein Dauermagnet als Rotor und eine den Rotor umfassende Wirbelstromglocke konzentrisch drehbar angeordnet. Zur Erzeugung eines Drehfelds sind drei Spulen in einem Stator vorgesehen, die von einem Impulsgeber mit Fahrzeuggeschwindigkeitsabhängiger Frequenz gespeist werden. Um den Geschwindigkeits- und Wegstreckenmesser auch beim Hochlauf mit gleichmäßigen Schrittwinkeln ohne Resonanzstellen und außer Tritt fallen des Rotors zu betreiben, ist bei Sternschaltung der Spulen der Impulsgeber zur Erzeugung von in diese eingespeisten treppenförmigen Pulsen eingerichtet, die jeweils um 180° beabstandete Größtwertimpulse entgegengesetzter Polarität und symmetrisch dazu Halbwertimpulse aufweisen.

EP 0 133 447 A2

./...

Fig. 1

VDO Adolf Schindling AG        - 1 -        6000 Frankfurt/Main
Gräfstraße 103

1707 / G-R Sch-kl
2. Mai 1983

<u>Elektrischer Geschwindigkeits- und Wegstreckenmesser</u>
<u>für Fahrzeuge</u>

Die Erfindung betrifft einen elektrischen Geschwindigkeits-
und Wegstreckenmesser für Fahrzeuge nach dem Oberbegriff
des Anspruchs 1.

Diese elektrischen Geschwindigkeits- und Wegstreckenmesser
gehören zu der Gattung der sogenannten E-Tachos, deren
grundsätzlicher Vorteil darin besteht, statt über eine
flexible Welle ("Flexwelle") über freizügig zu verlegende
elektrische Leitungen mit einem Geber verbunden zu sein.

Ein bekannter elektrischer Geschwindigkeits- und Wegstreckenmesser für Fahrzeuge der eingangs genannten Gattung besteht
im wesentlichen aus drei im Dreieck geschalteten, von einem
Drehstromgenerator als Geber gespeisten Spulen, in deren
Drehfeld ein Magnet sowie gleichachsig mit ihm eine Wirbelstromglocke eines Tachometers drehbar angeordnet sind. Das
Drehfeld erzeugt in Verbindung mit dem Magneten ein so großes
Drehmoment, daß das Zählwerk eines Wegstreckenmessers über ein
Schneckengetriebe angetrieben wird. Die Wirbelstromglocke
wird ebenfalls unter der Wirkung des Drehfeldes mitgenommen
und entgegen der Kraft einer Feder um einen der Geschwindigkeit des Fahrzeuges proportionalen Winkel ausgelenkt. Dabei
ist die Auslenkung durch den Magneten des Motors unterstützt.

Als einfache Form des Gebers wird statt des mit dem Getriebe des Fahrzeugs gekuppelten Drehstromgenerators ein dreiphasiger Kontaktgeber verwendet, der folgendermaßen aufgebaut ist: Zwei gegeneinander isolierte Schleifringe auf einer Welle sind über je eine Kontaktbürste mit je einem Pol der Fahrzeugbatterie als Gleichspannungsquelle verbunden. Jeder Schleifring steht mit einem weiteren Schleifkontakt in elektrischer Verbindung. Die beiden Schleifkontakte sind an den Enden zweier um 180° gegeneinander versetzter Arme auf der Welle angeordnet und schleifen auf einer dreiteiligen Segmentscheibe. Von jedem Segment der Segmentscheibe wird ein Puls zur Einspeisung in die drei im Dreieck geschalteten Spulen erzeugt (DE-GBM 1 610 729).

Es hat sich herausgestellt, daß dieser elektrische Geschwindigkeits- und Wegstreckenmesser zwar in der beabsichtigten und beschriebenen Weise bei Speisung durch Drehstromgeneratoren funktioniert, nicht aber mit der angegebenen einfachen dreiphasigen Kontaktvorrichtung. Die Drehstromspeisung erfordert nicht nur relativ teure Geber, sondern hat auch den grundsätzlichen Nachteil, daß der Geschwindigkeits- und Wegstreckenmesser nicht für jedes Weginkrement proportional angetrieben wird, sondern kontinuierlich läuft. Bei einer Einspeisung von Impulsen aus dem einfachen Kontaktgeber kommt hingegen kein Drehfeld zustande, welches bei einer eisenlosen Ausführung des Geschwindigkeits- und Wegstreckenmessers, wie zum Stand der Technik vorgesehen, einen eindeutigen Anlauf in einer Richtung bewirkt: Die bekannte Kontaktvorrichtung erzeugt in jeder von drei Phasen für drei Zuleitungen zu den Spulen unipolare Pulse, die durch eine konstante Pulshöhe über 180 elektrische Grad (bezogen auf die Pulsfrequenz) gekennzeichnet sind. Die drei Phasen sind dabei in üblicher Weise um je 120° gegeneinander verschoben.

0133447

Daraus ergibt sich, daß jeweils zwei Spulen erregt sind, während die dritte Spule keinen Beitrag zur Erregung liefert. Ein gleichmäßiges Drehfeld wird damit nicht gebildet, und es sind ungleichmäßige Schrittwinkel sowie beim Anlaufen Resonanzstellen bzw. ein außer Tritt fallen des Motors festgestellt worden.

Diese Nachteile könnten zwar dadurch weitgehend beseitigt werden, daß die Spulen auf Polschuhen großer magnetischer Leitfähigkeit angeordnet sind, die mit einem ebenso magnetisch leitenden Rückschluß verbunden sind. Ein solcher Aufbau des Geschwindigkeits- und Wegstreckenmessers ist aber nicht ohne weiteres für höhere Geberfrequenzen realisierbar und zumindest aufwendig.

Zu der vorliegenden Erfindung gehört daher die Aufgabe, einen elektrischen Geschwindigkeits- und Wegstreckenmesser für Fahrzeuge der eingangs genannten Gattung ohne Polschuhe und magnetischen Rückschluß und mit einer einfachen Ausbildung des Gebers zur Erzeugung der in die Spulen eingespeisten Pulse so weiter zu entwickeln, daß trotzdem ein gleichmäßiges Drehfeld erzeugt wird, bei dem sich konstante Schrittwinkel auch bei Hochlauf des Magneten einstellen. Insbesondere soll ein außer Tritt fallen des Magneten während des Hochlaufs sicher vermieden werden.

Diese Aufgabe wird durch die in dem kennzeichnenden Teil des Anspruchs 1 angegebene Erfindung gelöst.

Erfindungsgemäß gehört zum Betrieb des Geschwindigkeits- und Wegstreckenmessers ein Impulsgeber, der unterschiedliche Impulshöhen nach jeweils 60 elektrischen Grad und unterschiedliche Pulspolarität nach jeweils 180 Grad erzeugt.

- 4 -

Beispielsweise beginnt der Puls für die Phase 1 mit dem halben Höchstwert, steigt nach 60 Grad auf den Höchstwert und fällt nach 120 Grad wiederum auf den halben Höchstwert ab. Zwischen 180 Grad und 240 Grad kehrt sich die Polarität des Pulses auf den halben negativen Höchstwert um. Von 240 - 300 Grad stellt sich der negative Höchstwert ein, der ab 300 Grad auf den halben negativen Höchstwert abfällt, bis ab 360 Grad der beschriebene Pulsverlauf von vorne beginnt. Die Pulse für die zweite und dritte Phase sind gegenüber dem geschilderten Puls jeweils um 120° verschoben. Durch die Speisung der Spulen mit diesen Impulsen wird in jeweils zwei Spulen eine Magnetisierung in der gleichen Richtung und des gleichen Betrags erzeugt, während in der dritten Spule die Magnetisierung den doppelten Betrag, aber in umgekehrter Richtung annimmt. Dadurch ist die Magnetisierung in jeweils einer Spule hervorgehoben, und zwar nacheinander für alle Spulen in der Art eines Drehfeldes. Diese Impulse lassen sich durch elektronische Schaltungsanordnungen mit geringem Aufwand aus den üblichen Weginkrementimpulsen erzeugen. Sie ergeben sechs definierte Stellungen des Wegstreckenmessers, der somit als Schrittmotor wirkt. Damit werden exakte Messungen der Wegstrecke in einer einfachen Anordnung erzielt, die zudem die gleichzeitige Erfassung der Geschwindigkeit ermöglicht.

Die Impulse zur Speisung der in Sternschaltung angeordneten Spulen werden in wenig aufwendiger Weise mit drei Transistorbrückenschaltungen nach Anspruch 2 erzeugt. Jede Transistorbrückenschaltung enthält dabei zwei in Reihe geschaltete Transistoren, und zwar einen n-p-n-Transistor und einen p-n-p-Transistor. Jeweils einer dieser beiden Transistoren einer Transistorbrückenschaltung wird leitend gesteuert, und zwar die Transistoren zweier Brückenschaltungen jeweils in

- 5 -

gleicher Weise. Dadurch speisen je zwei Brückenschaltungen einen einfachen Strom in die Spulen ein, während ein Transistor der dritten Schaltung den doppelten Strom durch die dritte Spule leitet.

Zur Ansteuerung der Transistorbrückenschaltungen ist eine Motorschaltlogikanordnung vorgesehen, die die Transistoren in einer solchen Abfolge leitend steuert, daß sich das geschilderte Drehfeld einstellt. Auch die Motorlogikschaltungsanordnung ist wenig aufwendig und kann im einzelnen zweckmäßig mit einem sechsstufigen Ringzähler aufgebaut sein, der die Steuerzeitabschnitte über jeweils 60 elektrische Grad bildet.

Damit der Magnet des Rotors auch unter ungünstigsten Bedingungen nicht außer Schritt fällt, kann zweckmäßig zusätzlich die Maßnahme nach Anspruch 4 vorgesehen werden. Damit wird sichergestellt, daß der Wegstreckenmesser für höchste Anforderungen auch dann einwandfrei hochläuft, wenn beispielsweise die Weginkrementimpulsfrequenz 50 Hertz überschreitet und eine Unterbrechung eintritt. Unterbrechungen können beispielsweise durch Blockieren von Fahrzeugrädern bei Notbremsungen entstehen oder aber, wenn versehentlich im Betrieb des Fahrzeuges die Gleichspannungsquelle unterbrochen wird.

Um auch bei niedrigen Frequenzen des Weginkrementpulses einen unruhigen Lauf des Rotors zu vermeiden, kann vorteilhaft nach Anspruch 5 eine Strombegrenzung der Pulse, die in die Spulen eingespeist werden, vorgesehen sein. Damit wird vermieden, daß sich bei niedrigen Frequenzen bis ca. 10 Hertz Drehmomentüberschüsse entstehen und der Rotor in starke Schwingungen gerät. Wegen des Einflusses des Rotors auf die Wirbelstromglocke wird dadurch auch ein Zeigerzappeln vermieden.

Obwohl die Erfindung besonders vorteilhaft für eisenlose Systeme der Spulenanordnung eingesetzt wird, ist sie nicht auf Systeme ohne jeden magnetischen Rückschluß beschränkt. Vielmehr kann nach Anspruch 6 vorteilhaft ein Wirbelstromrückschlußring im Abstand zu den Spulen vorgesehen sein, der den elektrischen Geschwindigkeits- und Wegstreckenmesser gegenüber benachbarten Systemen abschirmt.

Die Erfindung wird im folgenden anhand einer Zeichnung mit 6 Figuren erläutert. Es zeigen:

Fig. 1    eine vereinfachte schaubildliche Darstellung des elektrischen Geschwindigkeits- und Wegstreckenmessers;

Fig. 2    eine Variante der Motoranordnung nach Fig. 1;

Fig. 3    ein Blockschaltbild der Gesamtanordnung in einer zweiten Ausführungsform;

Fig. 4    Brückenendstufen als Transistorbrückenschaltung;

Fig. 5    ein Diagramm der erzeugten Pulse für die Motoranordnung und

Fig. 6    das Motor- und Wirbelstromdrehmoment in Abhängigkeit von der Weginkrementfrequenz.

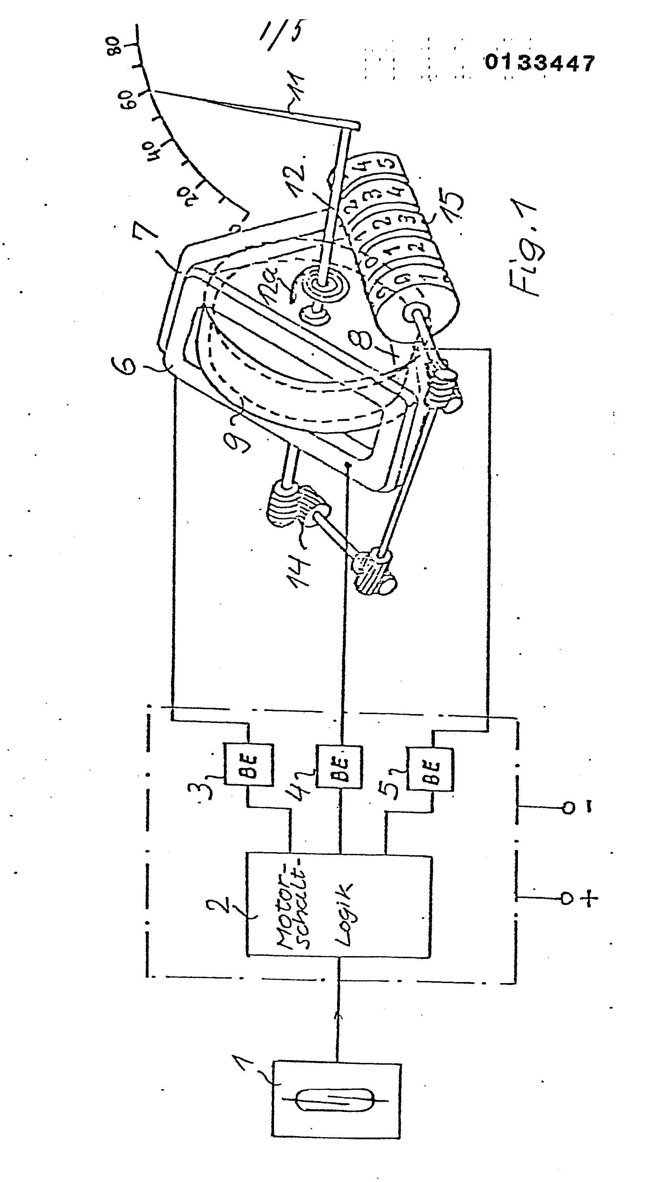

In Fig. 1 ist als Bestandteil eines Gebers 1 von Weginkrementimpulse ein Schutzrohrkontakt dargestellt. Die Weginkrementimpulse werden in eine Motorschaltlogik 2 eingespeist, die drei Brückenendstufen 3, 4, 5 zur Erzeugung von Pulsen steuert.

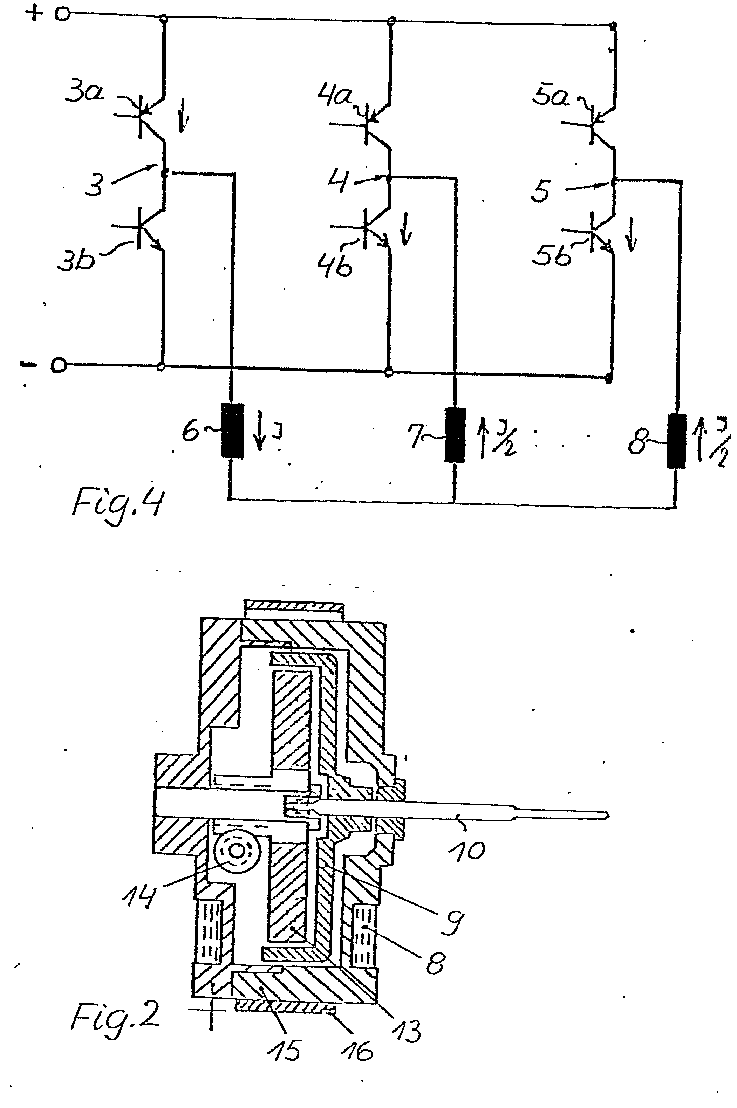

Die in noch zu beschreibender Weise erzeugten Pulse werden in drei im Stern geschalteten Spulen 6, 7, 8 der Motor- und Wirbelstromanordnung eingespeist. Die Motor- und Wirbelstromanordnung umfaßt eine Wirbelstromglocke 9, siehe auch Fig. 2, die über eine Welle 10 einen Geschwindigkeitszeiger 11 entgegen der Kraft einer Feder 12 auslenkt.

Ein koaxial zu der Welle 10 gelagerter Magnet 13 als Rotor treibt über eine Schnecke 14 und weitere nicht bezeichnete Getriebeelemente ein Rollenzählwerk 15 an.

Die Motor- und Wirbelstromanordnung nach Fig. 1 ist also eisenlos, d.h. ohne Polschuhe und magnetischen Rückschluß ausgebildet.

In der Ausführungsform nach Fig. 2 ist dargestellt, wie die Spule 8 auf ein Gehäuse 15 aus Kunststoff gewickelt ist. Zusätzlich ist in der Ausführungsform nach Fig. 2 noch ein nach außen abschirmender Rückschlußring 16 vorgesehen.

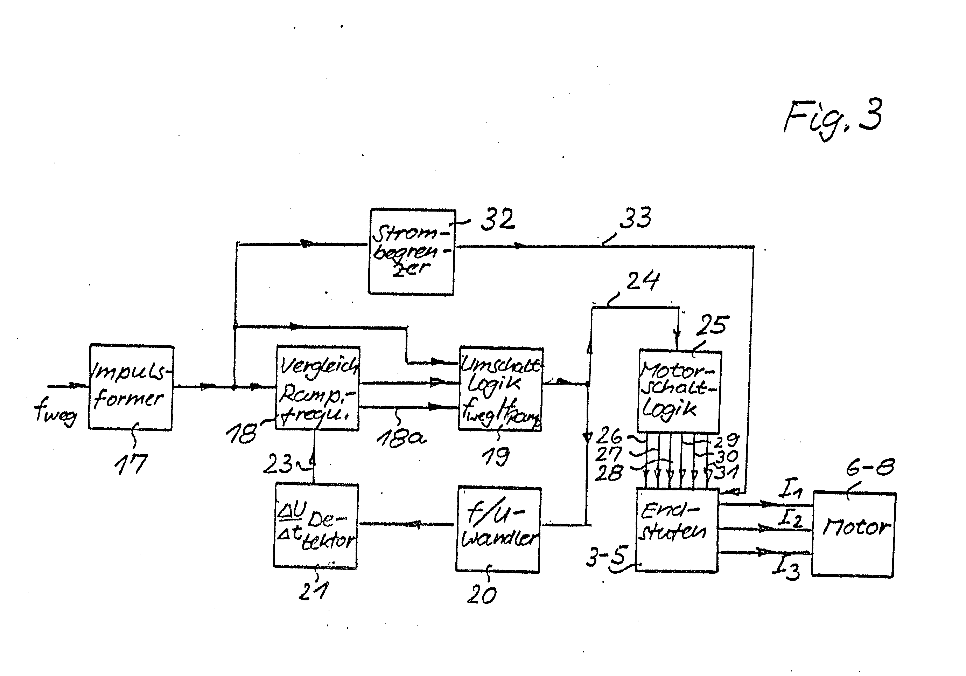

In der Gesamtanordnung der elektronischen Schaltung nach Fig.3 ist eine Eingangsschaltung zur Impulsaufbereitung mit 17 bezeichnet. In einem PLL Baustein 18 wird eine Frequenzrampe zum Beschleunigen der Motoranordnung aus dem Stillstand oder aus niedriger Schrittgeschwindigkeit gebildet. Außerdem wird in diesem Baustein die Frequenz der Weginkrementimpulse mit derjenigen der Frequenzrampe verglichen. Eine Steuerleitung 18a bestimmt in Verbindung mit einer Umschaltlogik 19, ob die Weginkrementimpulse oder die aus der Frequenzrampe abgeleiteten Impulse als Steuerfrequenz verwendet wird. Die Steuerfrequenz wird in einem Erkennungsteil mit einem Frequenz/Spannungswandler 20 und einem Spannungsänderungs-Detektor 21 ausgewertet. Das Ergebnis der Auswertung steuert über eine Leitung 23 den Vergleich der Weginkrementimpulse mit der Frequenzrampe.

Die Steuerfrequenz, die entweder die Weginkrementfrequenz oder eine Frequenz der Frequenzrampe ist, wird über eine Leitung 24 in eine Motorschaltlogik 25 eingespeist. Die Motorschaltlogik umfaßt insbesondere einen sechsstufigen Ringzähler, der für jeden Impuls der Steuerfrequenz um eine Stufe weitergeschaltet wird. Ein Zählzyklus des Ringzählers wird also mit sechs Steuerfrequenzen durchlaufen. Von jeder Stufe des Ringzählers geht eine Ansteuerleitung 26 bis 31 für die Brückenendstufen 3 bis 5 ab.

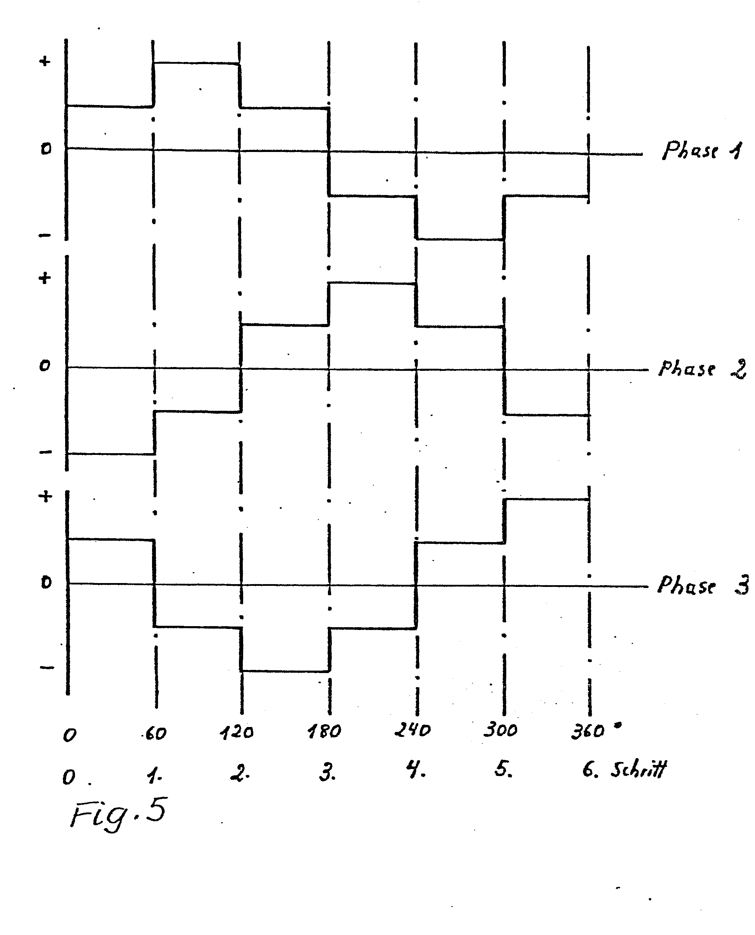

Die Brückenendstufen sind gemäß Fig. 4 als Transistorbrückenschaltungen ausgebildet. Es ist aus Fig. 4 ersichtlich, daß zu jeder der Transistorbrückenschaltungen ein p-n-p-Transistor, z.B. 3a und in Reihe zu dessen Emitterkollektorstrecke ein n-p-n-Transistor 3b vorgesehen sind. Es ist aus Fig. 4 ohne weiteres ersichtlich, wie die Brückenmittelpunkte, d.h. die Verbindungen zwischen den beiden Transistoren einer Transistor brückenschaltung an die in Sternschaltung geschalteten Spulen 6 bis 8 angeschlossen sind.

Zu Fig. 3 ist noch eine Schaltungsanordnung 32 zur Frequenz-abhängigen Strombegrenzung bemerkenswert. Diese Schaltungs-anordnung wird ebenfalls durch die Weginkrementimpulse umgeschaltet, und zwar von einem relativ niedrigen Wert von beispielsweise 70 mA bis 40 Hertz auf einen größeren Wert von beispielsweise 150 mA über 40 Hertz. Dieser Strom wird über eine Leitung 33 in die Endstufen 3 bis 5 eingespeist, um eine Abschwächung des Motordrehmoments bei kleinen Frequenzen und damit eine Dämpfung der Rotorbewegung zu erreichen

- 9 -

Aus Fig. 5 sind im einzelnen die Kurvenformen und die gegenseitigen phasenmäßigen Beziehungen der Pulse der Phasen 1, 2 und 3 ersichtlich, die mit der Motorschaltlogik 25 und den Endstufen 3 bis 5 - wie in Fig. 4 detaillierter dargestellt - erreicht werden. Beispielsweise wird zu Beginn des ersten Schritts zwischen 60 und 120 elektrischen Grad die Spule 7 ebenso wie die Spule 8 mit jeweils dem halben maximalen Strom in einer negativen Richtung beaufschlagt, da die Transistoren 4b und 5b leiten, während gleichzeitig die Spule 6 von dem vollen maximalen Strom in der positiven Richtung bei leitendem Transistor 3a durchflossen wird. Es erzeugt also, wie aus Fig. 5 weiter ersichtlich, jeweils eine der drei Spulen 6 bis 8 jeweils einen maximalen magnetischen Fluß, dem jeweils der halbe Fluß durch die beiden anderen Spulen gegenübersteht. Es wird so trotz der grobstufigen Kurvenform der Pulse in den Phasen 1, 2 und 3 ein so vollkommenes Drehfeld in der Motoranordnung sowohl nach Fig. 1 als auch nach Fig. 2 gebildet, daß der Magnet des Rotors um gleichmäßige Schrittwinkel ohne Resonanzstellen oder außer Tritt fallen in der Anlaufphase schrittweise gedreht wird.

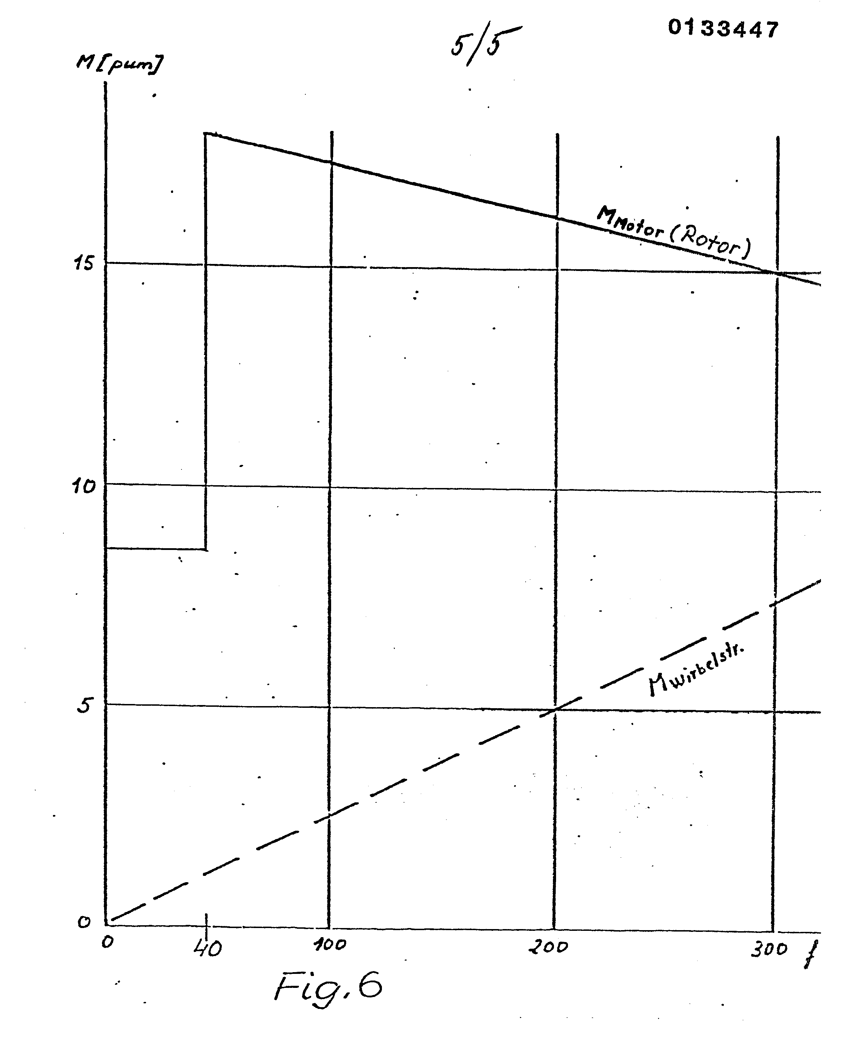

Aus Figur 6 ist ersichtlich, wie das Drehmoment des Rotors mit fallender Frequenz der Weginkrementimpulse zunimmt. Deswegen ist zum Dämpfen mechanischer Schwingungen vorgesehen, daß in dem Bereich von Null bis 40 Hertz der Pulsstrom herabgesetzt wird, so daß sich das Drehmoment reduziert. Das von dem Wirbelstromsystem erzeugte Drehmoment steigt dagegen mit wachsender Frequenz und entsprechend schnell rotierendem Drehfeld an.

VDO Adolf Schindling AG

Gräfstraße 103
6000 Frankfurt/Main
1707 / G-R Sch-kl
2. Mai 1983

Patentansprüche

1. Elektrischer Geschwindigkeits- und Wegstreckenmesser für Fahrzeuge, mit einem Dauermagneten als Rotor, mit einer den Rotor umfassenden Wirbelstromglocke sowie mit drei in einem Stator zur Erzeugung eines Drehfeldes angeordneten Spulen, die von einem Impulsgeber mit drei gegeneinander um 120° phasenverschobenen Pulsen mit Fahrzeuggeschwindigkeitabhängiger Frequenz gespeist werden, d a d u r c h   g e k e n n z e i c h n e t , daß bei Sternschaltung der Spulen der Impulsgeber (3-5, 25) zur Erzeugung von in die Spulen (6-8) eingespeisten treppenförmigen Pulse eingerichtet ist, die jeweils zwei um 180° beabstandete Größtwertimpulse entgegengesetzter Polarität und symmetrisch zu den Größtwertimpulsen Halbwertimpulse gleicher Polarität wie die Größtwertimpulse aufweisen (Fig. 5).

2. Elektrischer Geschwindigkeits- und Wegstreckenmesser nach Anspruch 1, d a d u r c h   g e k e n n z e i c h n e t , daß jedes dem Sternpunkt abgewandte Ende der Spulen (6-8 ) über eine Transistorbrückenschaltung (3, 4, 5) an einen . Pol einer zweipoligen Gleichspannungsquelle anschließbar ist, derart, daß jeweils zwei der Spulen (z.B. 7, 8) den halben Strom in umgekehrter Richtung bezogen auf den Strom in der dritten Spule (z.B. 6) leiten.

3. Elektrischer Geschwindigkeits- und Wegstreckenmesser für Fahrzeuge nach Anspruch 2, d a d u r c h   g e k e n n z e i c h n e t , daß Steuerimpulse für die Transistorbrückenschaltungen (3-5) in einer Motorschaltlogikanordnung (25) mit einem sechsstufigen Ringzähler gebildet werden, der für jeden von einem Getriebeimpulsgeber (1) abgegebenen Weginkrementimpuls um einen Schritt weiterschaltet.

4. Elektrischer Geschwindigkeits- und Wegstreckenmesser nach einem der Ansprüche 1-3,
d a d u r c h   g e k e n n z e i c h n e t ,
daß bei Unterbrechungen Gleichspannungsquelle und/oder der Weginkrementimpulse aktivierbare Mittel (18-21) zum rampenförmigen Hochlauf der Pulsfrequenz vorgesehen sind.

5. Elektrischer Geschwindigkeits- und Wegstreckenmesser nach einem der Ansprüche 1-4,
g e k e n n z e i c h n e t   d u r c h
Mittel (32) zur Strombegrenzung der Pulse, die bei Unterschreiten der Weginkrementimpulse unter eine vorgegebene Frequenz (40 Hertz) aktivierbar sind.

6. elektrischer Geschwindigkeits- und wegstreckenmesser nach einem der Ansprüche 1-5,
d a d u r c h   g e k e n n z e i c h n e t , daß die Wirbelstromglocke (9), der Magnet (13) und die Spulen (6-8) des Stators von einem Wirbelstromrückschlußring (16) eingeschlossen sind, der im Abstand zu den Spulen und ohne magnetisch leitende Verbindung zu diesen angeordnet ist.

0133447

Fig.1

Motor-schalt-Logik

BE

0133447......

Fig.4

Fig.2

Fig. 3

0133447

Fig. 5

Fig. 6